# EUROPÄISCHE PATENTSCHRIFT

(11) **EP 0 935 939 B1**
(45) Veröffentlichungstag und Bekanntmachung des Hinweises auf die Patenterteilung: **02.05.2001**
(21) Anmeldenummer: 99102453.0
(22) Anmeldetag: 09.02.1999
(51) Int. Cl.: A47J 37/04

(54) **Grillplatte**
Grilling plate
Plaque pour griller

(30) Priorität: 10.02.1998 CH 34798
(43) Veröffentlichungstag der Anmeldung: 18.08.1999
(73) Patentinhaber: DIWE Direktweg-Handels GmbH, 8219 Trasadingen (CH)
(72) Erfinder: Müller, Georges E., 8215 Hallau (CH)
(74) Vertreter: Blum, Rudolf Emil Ernst

(56) Entgegenhaltungen:
- WO-A-89/10720
- DE-A- 4 222 323
- DE-A- 19 611 338
- DE-U- 8 904 920

## Beschreibung

Die Erfindung betrifft eine Grillplatte und eine Verwendung derselben gemäss Oberbegriff der unabhängigen Ansprüche.

Beim Grillieren wird das Grillgut in der Regel auf einem Grillrost aus Metall gelagert. Bei Verwendung eines Grillrostes sollte jedoch nicht grilliert werden, solange das Feuer offene Flammen wirft. Ausserdem ist die Reinigung des Grillrostes aufwendig.

Es ist auch bekannt, Grillplatten aus Stein zu verwenden. Solche Platten sind jedoch schwer und benötigen ausserdem längere Zeit zum Aufwärmen.

Es stellt sich die Aufgabe, eine Grillplatte bereitzustellen, die diese Nachteile zumindest teilweise vermeidet. Diese Aufgabe wird von der Grillplatte bzw. der Verwendung gemäss den unabhängigen Ansprüchen gelöst.

Überraschenderweise zeigt es sich, dass eine Grillplatte aus Schaumkeramik ausgezeichnete Eigenschaften besitzt. Sie verschmutzt kaum und allfällige Ablagerungen können einfach ausgebrannt werden. Sie kann über offenen Flammen verwendet werden, da sie diese nicht durchlässt. Ausserdem verteilt sie die Wärme schnell und homogen auf das Bratgut. Aufgrund ihres geringen Gewichts ist sie leicht zu transportieren.

Bevorzugt wird eine Schaumkeramik aus Al₂O₃ eingesetzt, da dieses Material Verschmutzungen kaum, annimmt und physiologisch verträglich und kostengünstig ist. Es kann z. B. aber auch SiC, ZrO₂ oder eine Mischung aus den drei Materialien verwendet werden.

Vorzugsweise wird die Schaumkeramik in einem Rahmen angeordnet, der eine Abnutzung der Kantenbereiche vermeidet und die mechanische Stabilität erhöht.

Weitere Vorteile und bevorzugte Ausführungsbeispiele ergeben sich aus den abhängigen Ansprüchen sowie der nun folgenden Beschreibung anhand der Figuren. Dabei zeigen:
Fig. 1 eine Ausführung einer erfindungsgemässen Grillplatte und
Fig. 2 einen Schnitt durch einen Teil der Schaumkeramik.

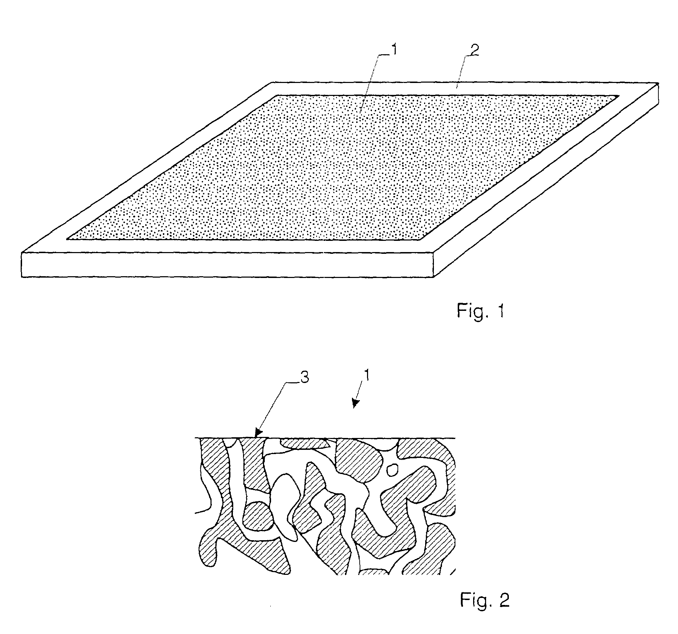

Die einfache Ausführung gemäss Figur 1 besteht aus einer Platte aus Schaumkeramik 1 und einem Rahmen 2 aus Metall, der die Kanten der Schaumkeramik 1 allseits nach aussen, oben und unten umschliesst.

Schaumkeramik ist eine durchgängig poröse Keramik, d.h. ein schwammartiger keramischer Filteterkörper mit zahlreichen Umlenkungen (Poren) und einer Dichte von 1.9 bis 2.7 g/cm³. Sie wird vorzugsweise hergestellt, indem ein schwammartiges Gerüst aus organischem Material (z.B. Polyurethan-Kunststoff) mit einer Keramikmasse (z.B. einem Schlicker aus Aluminiumoxid bzw. Siliziumcarbid) umgossen wird. Sodann wird die Keramik gebrannt, wodurch die Keramikmasse aushärtet. Gleichzeitig wird das schwammartige Gerüst verbrannt. Fig. 2 zeigt schematisch die Struktur einer so hergestellten Keramik.

Bevorzugte Schaumkeramiken haben eine typische Porengrösse von 10 bis 60 ppi (parts per inch). Bevorzugtes Keramikmaterial ist Al₂O₃. Es können jedoch auch andere Materialien verwendet werden, z. B. Siliziumkarbid oder Zirkonoxid. Geeignete Schaumkeramiken sind bei der Firma Kapyrok AG, Schleitheim (CH) erhältlich.

Die Dichte der bevorzugten Ausführung der Schaumkeramik aus Al₂O₃ beträgt etwa 2.4 g/cm³ für 10 - 60 ppi.

Vorzugsweise beträgt die Dicke der Schaumkeramikplatte 1 bis 3 cm, insbesondere 2 cm. Bei dieser Dicke wird eine gute mechanische Stabilität und ausreichende thermische Permeabilität erreicht.

Vor Verwendung wird die Oberfläche 3 der Schaumkeramik gebürstet, so dass die Gefahr eines Losbrechens von Keramikpartikeln während der Benutzung reduziert wird. Sodann wird die Schaumkeramikplatte im Rahmen 2 eingefasst.

Bei Verwendung kann die erfindungsgemässe Grillplatte auf das Feuer gebracht werden, selbst wenn noch offene Flammen vorhanden sind. Das Bratgut wird direkt auf die Schaumkeramik gelegt.

Es zeigt sich, dass die Verschmutzung der Schaumkeramik äusserst gering ist, da die Keramik, insbesondere wenn sie aus Al₂O₃ besteht, schmutzabstossend ist. Falls sich dennoch Schmutz in den Poren ansammelt, so kann dieser durch Erhitzen der Grillplatte auf dem Feuer verbrannt werden. Hierzu wird nötigenfalls die Platte um 180° gedreht, so dass die stärker vom Bratgut verschmutzte Seite dem Feuer zugewandt ist.

Wie bereits erwähnt hält die Grillplatte offene Flammen vom Bratgut ab und verteilt die Wärme des Feuers. Sie gewährt eine gute Wärmeübertragung, einerseits dank ihrer Permeabilität, andererseits wegen der guten Wärmeleitfähigkeit der verwendeten keramischen Materialien. Sie wirkt ausserdem als Filter, das einen grossen Teil der Schwebestoffe (z.B. Russ) vom Bratgut fernhält. Sie verhindert ferner, dass Fett vom Bratgut in die Glut tropft.

Dank ihres geringen Gewichts ist sie leicht handzuhaben und portabel so dass sie z. B. auf Wanderungen mitgenommen werden kann.

Mit der erfindungsgemässen Grillplatte aus einer Schaumkeramik wird ein optimales Imitieren des herkömmlichen Grillrost-Grillens ermöglicht. Dank der zahlreichen Poren der Schaumkeramik zeigt sich völlig überraschend, dass die von der Feuerstelle auf die Grillplatte auftreffende Heissluft im wesentlichen ungehindert (annähernd 100 %) durch die Grillplatte hindurchtreten und so den gewünschten Grilleffekt bewirken kann, wobei aber gleichzeitig die unerwünschten Flammen sowie die toxischen Russteilchen zurückgehalten werden. Damit unterscheidet sich die erfindungsgemässe Grillplatte von festen Steinplatten, welche im wesentlichen gasundurchlässige Bratflächen sind, in entscheidender Weise.

## Patentansprüche

1. Grillplatte zur Aufnahme des Bratguts beim Grillieren, dadurch gekennzeichnet, dass sie mindestens teilweise aus einer Schaumkeramik (1) mit einer Dichte von zwischen 1.9 und 2.7 g/cm³ besteht.

2. Grillplatte nach Anspruch 1, dadurch gekennzeichnet, dass die Schaumkeramik (1) Al₂O₃ enthält oder daraus besteht.

3. Grillplatte nach einem der vorangehenden Ansprüche, dadurch gekennzeichnet, dass die Schaumkeramik (1) mindestens ein Material ausgewählt aus der Gruppe Al₂O₃, SiC, ZrO₂ enthält.

4. Grillplatte nach einem der vorangehenden Ansprüche, dadurch gekennzeichnet, dass die Schaumkeramik (1) eine Porendichte zwischen 10 bis 60 ppi, vorzugsweise 10 - 30 ppi aufweist.

5. Grillplatte nach einem der vorangehenden Ansprüche, dadurch gekennzeichnet, dass sie zur Verstärkung einen Rahmen (2) aufweist, in welchem die Schaumkeramik angeordnet ist.

6. Grillplatte nach einem der vorangehenden Ansprüche, dadurch gekennzeichnet, dass sie eine Dicke von 1 bis 3 cm aufweist.

7. Grillplatte nach einem der vorangehenden Ansprüche, dadurch gekennzeichnet, dass die Schaumkeramik erhältlich ist durch Umgiessen eines Kunststoff-Schwamms mit einem Keramik-Schlicker und anschliessendem Brennen des Teils.

8. Verwendung der Grillplatte nach einem der vorangehenden Ansprüche zum Grillieren von Bratgut.

## Claims

1. Grilling plate for the reception of the grilling-goods during grilling, characterized in that it consists at least in part of a ceramic foam (1) with a density between 1.9 and 2.7 g/cm³.

2. Grilling plate of claim 1, characterized in that the ceramic foam (1) contains or consists of Al₂O₃.

3. Grilling plate of one of the preceding claims, characterized in that the ceramic foam (1) contains at least one material selected from the group Al₂O₃, SiC, ZrO₂.

4. Grilling plate of one of the preceding claims, characterized in that the ceramic foam (1) has a pore density between 10 to 60 ppi, preferred 10-30 ppi.

5. Grilling plate of one of the preceding claims, characterized in that it has a frame (2) for reinforcement, in which the ceramic foam is arranged.

6. Grilling plate of one of the preceding claims, characterized in that it has a thickness of 1 to 3 cm.

7. Grilling plate of one of the preceding claims, characterized in that the ceramic foam can be obtained by casting-in a sponge of synthetic material with a ceramic slip and afterwards baking of that workpiece.

8. Use of the grilling plate of one of the preceding claims for grilling of grilling-goods.

## Revendications

1. Plaque servant de gril pour recevoir les mets à griller, caractérisée en ce qu'elle consiste au moins partiellement en céramique expansée (1) ayant un poids spécifique compris entre 1,9 et 2,7 g/cm³.

2. Plaque selon la revendication 1, caractérisée en ce que la céramique expansée (1) contient du Al₃O₃ ou consiste en cette matière.

3. Plaque selon une des revendications, précédentes, caractérisée en ce que la céramique expansée (1) contient au moins une matière du groupe suivant: Al₂O₃, SiC, ZrO₂.

4. Plaque selon une des revendications précédentes, caractérisée en ce que la céramique expansée (1) présente une densité de pores comprise entre 10 et 60 ppi, et de préférence entre 10 et 30 ppi.

5. Plaque selon une des revendications précédentes, caractérisée en ce qu'elle comporte un cadre (2) de renforcement entourant la céramique.

6. Plaque selon une des revendications précédentes,.caractérisée en ce que son épaisseur est comprise entre 1 et 3 cm.

7. Plaque selon une des revendications précédentes, caractérisée en ce que la céramique peut être obtenue par déversement d'une coulée de barbotine céramique sur un matériau plastique spongieux, suivi d'une cuisson.

8. Utilisation d'une plaque selon une des revendications précédentes pour griller un met.
